# EUROPÄISCHE PATENTSCHRIFT

(11) **EP 3 839 144 B1**
(45) Veröffentlichungstag und Bekanntmachung des Hinweises auf die Patenterteilung: **14.08.2024**
(21) Anmeldenummer: 20207726.9
(22) Anmeldetag: 16.11.2020
(51) Int. Cl.: E01C 19/20, F16M 11/22, F16M 11/38

(54) **ZUSATZGERÄT, INSBESONDERE SPLITTSTREUER**
ATTACHMENT, IN PARTICULAR GRIT SPREADER
EQUIPEMENT PORTÉ, EN PARTICULIER GRAVILLONNEUSE

(30) Priorität: 16.12.2019 DE 102019134452
(43) Veröffentlichungstag der Anmeldung: 23.06.2021
(73) Patentinhaber: Hamm AG, 95643 Tirschenreuth (DE)
(72) Erfinder: Bornemann, Detlef, 95666 Leonberg (DE); Weiß, Andreas, 95666 Leonberg (DE); Gradl, Hermann, 95643 Tirschenreuth (DE)
(74) Vertreter: Ruttensperger Lachnit Trossin Gomoll

(56) Entgegenhaltungen:
- EP-A1- 1 097 656
- WO-A1-2009/110489
- DE-A1- 102008 054 338
- DE-A1- 4 138 146
- DE-U1- 202016 102 819
- US-A1- 2005 077 695

## Beschreibung

Die vorliegende Erfindung betrifft ein Zusatzgerät, wie zum Beispiel einen Splittstreuer, das an einer Bodenbearbeitungsmaschine, wie zum Beispiel einem Bodenverdichter, lösbar angebracht werden kann.

Beim Einbau von Asphalt ist es teilweise erforderlich, beim Verdichtungsvorgang Splitt in die Asphaltoberfläche einzuarbeiten. Dies kann dadurch erfolgen, dass an einem den Verdichtungsvorgang durchführenden Bodenverdichter ein Splittstreuer angebracht wird, welcher während des Verdichtungsvorgangs auf dem zu verdichtenden Asphalt Splitt verteilt, der dann durch den den Asphalt verdichtenden Bodenverdichter in die Oberfläche eingearbeitet wird. Da derartige Bodenverdichter auch zu Arbeiten eingesetzt werden, welche das Ausbringen von Splitt nicht erfordern, ist es vorteilhaft, die zum Ausbringen von Splitt eingesetzten Steuer so zu gestalten, dass sie nur bei Bedarf an einem Bodenverdichter angebracht werden.

Ein Zusatzgerät gemäß dem Oberbegriff des Anspruchs 1 ist aus der DE 41 38 146 A1 bekannt. Bei diesem Zusatzgerät sind zwei in einer Zusatzgerät-Querrichtung in Abstand zueinander angeordnete Standbeineinheiten jeweils um eine in der Zusatzgerät-Längsrichtung sich erstreckende Schwenkachse zwischen einer Aktivstellung und einer Inaktivstellung verschwenkbar.

Bei einem aus der DE 20 2016 102 819 U1 bekannten Zusatzgerät sind zwei in einer Zusatzgerät-Querrichtung in Abstand zueinander angeordnete Standbeineinheiten jeweils um eine in der Zusatzgerät-Querrichtung sich erstreckende Schwenkachse zwischen einer Aktivstellung und einer Inaktivstellung verschwenkbar.

Aus der EP 1 097 656 A1 ist ein Arbeitstisch bekannt, bei dem Standbeineinheiten vermittels jeweiliger Schwenk-Kopplungsanordnungen an einer Tischplatte zwischen einer nach unten ausgeschwenkten Aktivstellung und einer an die Tischplatte angeschwenkten Inaktivstellung verschwenkbar sind. Jede Schwenk-Kopplungsanordnung umfasst einen bezüglich der Tischplatte feststehenden Schwenk-Kopplungsträger mit einer darin ausgebildeten, gekrümmten Schwenk-Schiebe-Aussparung und zwei darin ausgebildeten Arretieraussparungen. An den mit den Schwenk-Kopplungsträgern zusammenwirkenden Standbeineinheiten der Standbeinbaugruppen sind in Zuordnung zu den Schwenk-Schiebe-Aussparungen jeweils ein darin verschiebbar aufgenommener Schwenk-Schiebe-Vorsprung sowie ein abhängig von der Schwenkstellung einer jeweiligen Standbeinbaugruppe in eine der Arretieraussparungen eingreifender Arretiervorsprung vorgesehen.

Es ist die Aufgabe der vorliegenden Erfindung, ein Zusatzgerät, insbesondere Splittstreuer, zur lösbaren Anbringung an einer Bodenbearbeitungsmaschine, insbesondere Bodenverdichter, vorzusehen, welches in einfacher Weise die Durchführung von Kopplungsvorgängen mit einer Bodenbearbeitungsmaschine ermöglicht.

Erfindungsgemäß wird diese Aufgabe gelöst durch ein Zusatzgerät, insbesondere Splittstreuer, zur lösbaren Anbringung an einer Bodenbearbeitungsmaschine, insbesondere Bodenverdichter, gemäß Anspruch 1. Das erfindungsgemäße Zusatzgerät umfasst:
- einen Gerätekörper,
- eine Kopplungseinheit zum Beispiel am Gerätekörper zur Kopplung mit einer Gegen-Kopplungseinheit an einer Bodenbearbeitungsmaschine,
- eine Standbeinbaugruppe mit wenigstens einer am Gerätekörper zwischen einer Aktivstellung und einer Inaktivstellung verschwenkbaren Standbeineinheit mit wenigstens einem Standbein, wobei in der Aktivstellung die wenigstens eine Standbeineinheit zum Bereitstellen einer Standbeinfunktion in einer Höhenrichtung nach unten verschwenkt ist und in der Inaktivstellung die wenigstens eine Standbeineinheit in der Höhenrichtung nach oben verschwenkt ist.

Durch das Vorsehen der Standbeinbaugruppe kann bei in der Aktivstellung positionierter Standbeineinheit bzw. positionierten Standbeineinheiten das gesamte Zusatzgerät auf der Standbeinbaugruppe abgestellt werden, so dass es einerseits in einem Zustand ist, in welchem für einen nachfolgend durchzuführenden Arbeitsvorgang das Zusatzgerät leicht mit einer Bodenbearbeitungsmaschine gekoppelt werden kann. Andererseits ist gewährleistet, dass insbesondere im unteren Bereich des Zusatzgeräts vorgesehene Aggregate beim Entkoppeln des Zusatzgeräts von einer Bodenbearbeitungsmaschine und Abstellen des Zusatzgeräts auf dem Boden nicht beschädigt werden.

Für einen stabilen Stand wird vorgeschlagen, dass die Standbeinbaugruppe zwei in einer Zusatzgerät-Querrichtung in Abstand zueinander angeordnete Standbeineinheiten umfasst.

Jede Standbeineinheit kann um eine im Wesentlichen in einer Zusatzgerät-Längsrichtung sich erstreckende Schwenkachse zwischen der Aktivstellung und der Inaktivstellung verschwenkbar sein.

Es ist in diesem Zusammenhang darauf hinzuweisen, dass die Höhenrichtung einer Vertikalrichtung in einem Erdkoordinatensystem entsprechen kann, während die Zusatzgerät-Querrichtung und die Zusatzgerät-Längsrichtung zueinander orthogonale stehend im Wesentlichen in einer horizontalen Ebene verlaufen können, wobei die Zusatzgerät-Längsrichtung im Wesentlichen auch einer Längsrichtung einer mit dem Zusatzgerät zu koppelnden Bodenbearbeitungsmaschine bzw. einer Bewegungsrichtung der Bodenbearbeitungsmaschine bei Durchführung eines Arbeitsvorgangs entsprechen kann.

Weiter kann zur Erhöhung der Stabilität wenigstens eine, vorzugsweise jede Standbeineinheit wenigstens zwei im Wesentlichen in einer Zusatzgerät-Längsrichtung in Abstand zueinander angeordnete Standbeine umfassen.

Zur Anbindung einer jeweiligen Standbeineinheit an den Gerätekörper ist in Zuordnung zu jeder Standbeineinheit wenigstens eine Schwenk-Kopplungsanordnung zur schwenkbaren Kopplung der Standbeineinheit mit dem Gerätekörper vorgesehen.

Auch in diesem Bereich kann eine erhöhte Stabilität dadurch erreicht werden, dass bei wenigstens einer, vorzugsweise jeder Standbeineinheit in Zuordnung zu jedem Standbein eine Schwenk-Kopplungsanordnung vorgesehen ist.

Um eine Verschwenkung zwischen der Aktivstellung und der Inaktivstellung leicht durchführen zu können, umfasst wenigstens eine, vorzugsweise jede Schwenk-Kopplungsanordnung:
- eine Schwenk-Schiebe-Aussparung und wenigstens zwei Arretieraussparungen an einem bezüglich einer Baugruppe von Gerätekörper und Standbeineinheit, vorzugsweise bezüglich des Gerätekörpers, feststehenden Schwenk-Kopplungsträger, wobei jede Arretieraussparung vorzugsweise in Richtung von der Schwenk-Schiebe-Aussparung weg offen ist,
- einen in der Schwenk-Schiebe-Aussparung verschwenkbar und verschiebbar aufgenommen Schwenk-Schiebe-Vorsprung an der anderen Baugruppe von Gerätekörper und Standbeineinheit, vorzugsweise an der Standbeineinheit,
- einen Arretiervorsprung an der anderen Baugruppe von Gerätekörper und Standbeineinheit, vorzugsweise an der Standbeineinheit, wobei durch Verschwenken und Verschieben des Schwenk-Schiebe-Vorsprungs in der Schwenk-Schiebe-Aussparung der Arretiervorsprung wahlweise in einer ersten der Arretieraussparungen oder einer zweiten der Arretieraussparungen positionierbar ist.

Für eine stabile Abstützung einer jeweiligen Standbeineinheit bezüglich des Gerätekörpers ist die Schwenk-Schiebe-Aussparung in Richtung einer Aussparungslängsachse langgestreckt und weist in Richtung der Aussparungslängsachse mit Abstand zueinander angeordnete Aussparungsendbereiche auf, wobei bei in die erste Arretieraussparung eingreifendem Arretiervorsprung der Schwenk-Schiebe-Vorsprung im Bereich eines ersten der Aussparungsendbereiche positioniert, vorzugsweise abgestützt ist und bei in die zweite Arretieraussparung eingreifendem Arretiervorsprung der Schwenk-Schiebe-Vorsprung im Bereich eines zweiten der Aussparungsendbereiche positioniert, vorzugsweise abgestützt ist. Es kann somit eine Anordnung bereitgestellt werden, bei welcher die kraftübertragende Abstützung einer jeweiligen Standbeineinheit bezüglich des Gerätekörpers vermittels des bzw. der Schwenk-Schiebe-Vorsprünge erfolgt, während der bzw. die in eine jeweilige Arretieraussparung eingreifenden Arretiervorsprünge primär die Funktion haben, eine Verschwenkung einer jeweiligen Standbeineinheit zu verhindern.

Dabei ist der erste Aussparungsendbereich an einem von der ersten Arretieraussparung entfernten Ende der Schwenk-Schiebe-Aussparung vorgesehen, und der zweite Aussparungsendbereich ist an einem von der zweiten Arretieraussparung entfernten Ende der Schwenk-Schiebe-Aussparung vorgesehen.

Um zwischen der Aktivstellung und der Inaktivstellung einen Schwenkwinkel von etwa 180° bereitstellen zu können, sind die erste Arretieraussparung und die zweite Arretieraussparung im Wesentlichen in Richtung der Aussparungslängsachse der Schwenk-Schiebe-Aussparung die Schwenk-Schiebe-Aussparung zwischen sich aufnehmend beidseits der Schwenk-Schiebe-Aussparung angeordnet und im Wesentlichen in Richtung der Aussparungslängsachse voneinander weg offen. Die Aussparungslängsachse der Schwenk-Schiebe-Aussparung kann sich im Wesentlichen in der Höhenrichtung erstrecken.

Um sicherzustellen, dass bei in eine jeweilige Arretieraussparung eingreifendem Arretiervorsprung dieser Zustand zuverlässig beibehalten wird, können Vorspannmittel vorgesehen sein zum Vorspannen der Standbeineinheit derart, dass bei in jede der Arretieraussparungen eingreifendem Arretiervorsprung der Arretiervorsprung in Richtung Eingriff in die jeweilige Arretieraussparung vorgespannt ist.

Bei einem einfach zu realisierenden Aufbau können die Vorspannmittel wenigstens eine Vorspannfeder, beispielsweise Schraubenzugfeder, umfassen, wobei die wenigstens eine Vorspannfeder bezüglich des Schwenk-Kopplungsträgers einerseits und der Standbeineinheit andererseits abgestützt ist.

Um berücksichtigen zu können, dass in unterschiedlichen Positionierungen einer jeweiligen Standbeineinheit deren Gewichtskraft unterschiedlich dazu beiträgt, den Eingriffszustand des Arretiervorsprungs in eine jeweilige Arretieraussparung beizubehalten oder aufzuheben, wird vorgeschlagen, dass bei in die erste Arretieraussparung eingreifendem Arretiervorsprung die Vorspannmittel eine größere Vorspannkraft erzeugen, als bei in die zweite Arretieraussparung eingreifendem Arretiervorsprung.

Hierzu kann beispielsweise vorgesehen sein, dass die wenigstens eine Vorspannfeder bezüglich des Schwenk-Kopplungsträgers in einem Abstützbereich zwischen der ersten Arretieraussparung und der zweiten Arretieraussparung abgestützt ist, und dass ein Abstand des Abstützbereichs zu der ersten Arretieraussparung größer ist, als ein Abstand des Abstützbereichs zu der zweiten Arretieraussparung. Dies bedeutet, dass die wenigstens eine Vorspannfeder in den verschiedenen Eingriffszuständen des Arretiervorsprungs unterschiedlich belastet, insbesondere gespannt ist und somit entsprechend unterschiedliche den jeweiligen Eingriffszustand beibehaltende Vorspannkräfte erzeugt.

Ein ungewolltes Lösen einer Standbeineinheit aus zumindest einer der für diese vorgesehenen Stellungen kann dadurch verhindert werden, dass Blockiermittel vorgesehen sind zum Blockieren der Standbeineinheit gegen Bewegung bezüglich des Schwenk-Kopplungsträgers wenigstens bei in eine der Arretieraussparungen eingreifendem Arretiervorsprung.

Hierzu können die Blockiermittel ein die Vorspannmittel gegen Veränderung des Vorspannzustandes blockierendes Blockierelement umfassen. Ferner kann ein zuverlässiger Beibehalt des Blockierzustandes dadurch gewährleistet werden, dass die Blockiermittel durch die Vorspannmittel in einen Blockierzustand vorgespannt sind.

Bei dem erfindungsgemäß aufgebauten Zusatzgerät kann bei in die erste Arretieraussparung eingreifendem Arretiervorsprung die Standbeineinheit in der Aktivstellung sein, und bei in die zweite Arretieraussparung eingreifendem Arretiervorsprung kann die Standbeineinheit in der Inaktivstellung sein.

Um das Ankoppeln des Zusatzgeräts an eine Bodenbearbeitungsmaschine zu erleichtern, kann die Kopplungseinheit an dem Gerätekörper im Wesentlichen in der Höhenrichtung verstellbar vorgesehen sein.

Die vorliegende Erfindung wird nachfolgend mit Bezug auf die beiliegenden Figuren detailliert beschrieben. Es zeigt:
- Fig. 1: eine perspektivische Ansicht eines als Splittstreuer ausgebildeten Zusatzgeräts für eine Bodenbearbeitungsmaschine mit in einer Aktivstellung positionierten Standbeineinheiten;
- Fig. 2: das Zusatzgerät der Fig. 1 mit in einer Inaktivstellung positionierten Standbeineinheiten;
- Fig. 3: eine Seitenansicht einer Schwenk-Kopplungsanordnung des Zusatzgeräts der Fig. 1 und 3 bei in der Aktivstellung positionierter Standbeineinheit;
- Fig. 4: die Schwenk-Kopplungsanordnung der Fig. 3 bei in der Inaktivstellung positionierter Standbeineinheit;
- Fig. 5: eine perspektivische Ansicht einer Schwenk-Kopplungsanordnung bei in der Inaktivstellung positionierter Standbeineinheit;
- Fig. 6: das Zusatzgerät der Fig. 1 und 2 bei Herstellung einer Kopplung mit einer Bodenbearbeitungsmaschine;
- Fig. 7: das mit einer Bodenbearbeitungsmaschine gekoppelte Zusatzgerät.

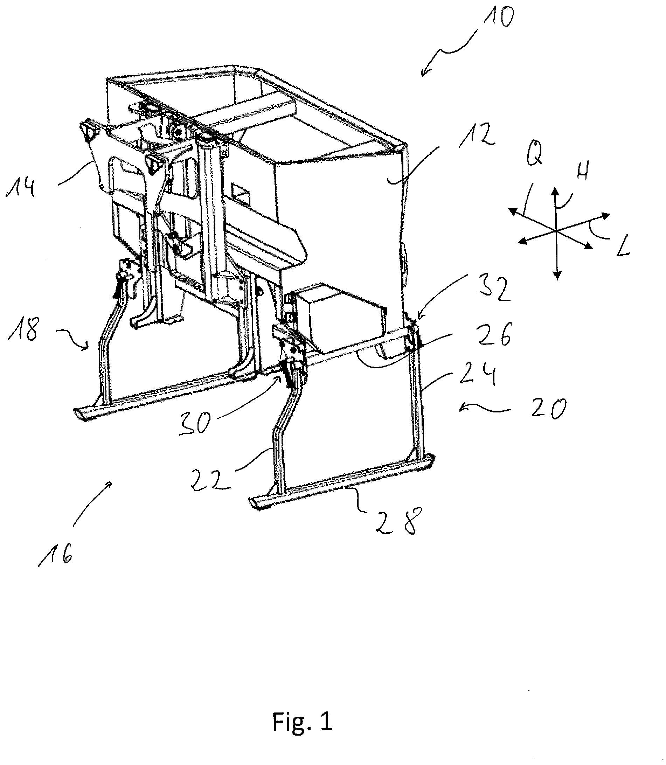

In Fig. 1 ist ein in Form eines Splittstreuers ausgebildetes Zusatzgerät für eine Bodenbearbeitungsmaschine, insbesondere für einen Bodenverdichter, allgemein mit 10 bezeichnet. Das Zusatzgerät 10 umfasst einen Gerätekörper 12, an welchem im Wesentlichen die zur Durchführung des für das Zusatzgerät 10 vorgesehenen Betriebs erforderlichen Systembereiche untergebracht sind. Bei Ausgestaltung des Zusatzgeräts 10 als Splitstreuer ist in dem Gerätekörper einerseits das Speichervolumen für den zu verstreuenden Splitt vorgesehen, andererseits der Mechanismus zum Ausbringen des Splitts auf den zu bestreuenden Untergrund.

Am Gerätekörper 12 ist ferner eine allgemein mit 14 bezeichnete Kopplungseinheit vorgesehen, vermittels welcher das Zusatzgerät 10 mit einer Bodenbearbeitungsmaschine, beispielsweise einem Bodenverdichter, gekoppelt werden kann.

In einem unteren Bereich des Gerätekörpers 12 ist eine allgemein mit 16 bezeichnete Standbeinbaugruppe vorgesehen. Im dargestellten Beispiel umfasst die Standbeinbaugruppe 16 zwei in einer Zusatzgerät-Querrichtung Q mit Abstand zueinander angeordnete Standbeineinheiten 18, 20. Jede der beiden Standbeineinheiten 18, 20 umfasst zwei in einer Zusatzgerät-Längsrichtung L in Abstand zueinander angeordnete Standbeine 22, 24. Diese sind an ihren in nachfolgend beschriebener Art und Weise am Gerätekörper 12 schwenkbar getragenen Endbereichen vermittels einer Verbindungsstrebe 26 miteinander fest verbunden, und sind an ihren von der schwenkbaren Ankopplung an den Gerätekörper 12 entfernten Endbereichen durch eine Aufstandstrebe 28 miteinander fest verbunden.

In Fig. 1 sind die beiden Standbeineinheiten 18, 20 jeweils in einer Aktivstellung gezeigt, in welcher diese in einer Höhenrichtung H nach unten verschwenkt sind, also vom Gerätekörper 12 sich nach unten erstrecken und somit mit ihren Aufstandstreben 28 auf einem Untergrund aufstehen können.

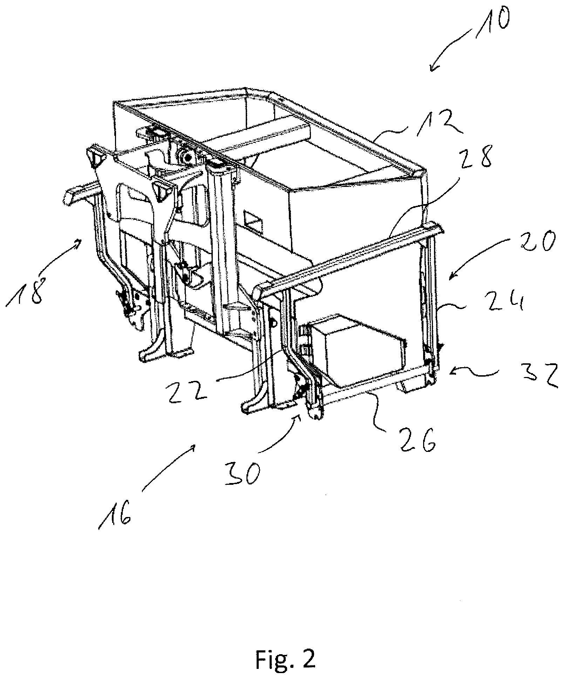

Die Fig. 2 zeigt das Zusatzgerät 10 mit in einer Inaktivstellung positionierten Standbeineinheiten 18, 20 der Standbeinbaugruppe 16. In der Inaktivstellung sind die beiden Standbeineinheiten jeweils an den beiden in der Zusatzgerät-Querrichtung Q orientierten Seitenbereichen des Zusatzgeräts 10 nach oben verschwenkt positioniert, so dass die Standbeine 22, 24 derselben sich ausgehend von der schwenkbaren Ankopplung an den Gerätekörper 12 beispielsweise näherungsweise vertikal nach oben erstrecken.

In Zuordnung zu jedem der Standbeine 22, 24 der beiden Standbeineinheiten 18, 20 ist jeweils eine die schwenkbare Ankopplung an den Gerätekörper 12 realisierende Schwenk-Kopplungsanordnung 30, 32 vorgesehen. Die in Zuordnung zu den insgesamt vier Standbeinen 22, 24 der beiden Standbeineinheiten 18, 20 vorgesehenen Schwenk-Kopplungsanordnungen 30, 32 sind vorzugsweise grundsätzlich zueinander baugleich, wobei die verschiedenen Standbeinen 22, 24 zugeordneten Schwenk-Kopplungsanordnungen 30, 32 grundsätzlich zueinander spiegelsymmetrisch aufgebaut sein können und selbstverständlich auch die den beiden Standbeineinheiten 18, 20 jeweils zugeordneten Schwenk-Kopplungsanordnungen 30, 32 zueinander spiegelsymmetrisch aufgebaut sein können.

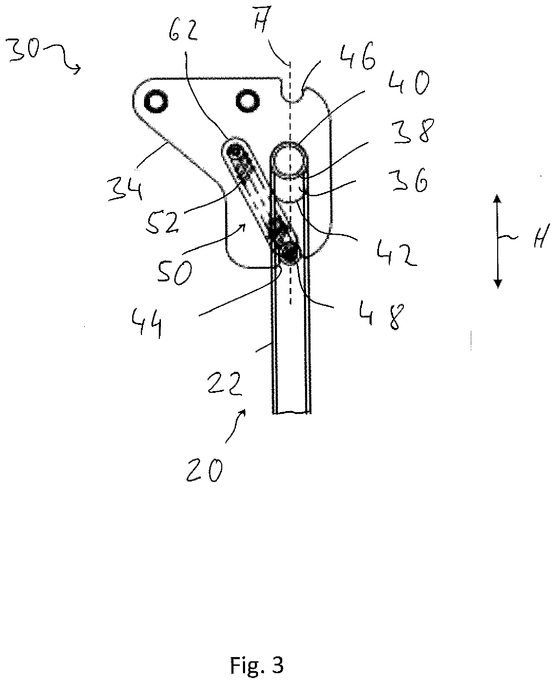

Der Aufbau einer derartigen Schwenk-Kopplungsanordnung, beispielsweise der in den Fig. 1 und 2 in Zuordnung zum Standbein 22 der Standbeineinheit 20 vorgesehenen Schwenk-Kopplungsanordnung 30, wird nachfolgend mit Bezug auf die Fig. 3 bis 5 beschrieben.

Die Fig. 3 zeigt die Schwenk-Kopplungsanordnung 30 bei in der Aktivstellung positionierter Standbeineinheit 20. Die Schwenk-Kopplungsanordnung 30 umfasst einen beispielsweise plattenartig ausgebildeten Schwenk-Kopplungsträger 34, welcher durch Verschraubung oder/und Verschweißung oder in sonstiger Weise stabil an den Gerätekörper 12 angebunden sein kann. In dem Schwenk-Kopplungsträger 34 ist eine in Richtung einer Aussparungslängsachse A langgestreckte, also langlochartig ausgebildete Schwenk-Schiebe-Aussparung 36 vorgesehen. Die Aussparungslängsachse A kann näherungsweise in der Höhenrichtung H sich erstreckend angeordnet sein. An der Standbeineinheit 20 ist ein beispielsweise durch ein axiales Ende der Verbindungsstrebe 26 bereitgestellter, in die Schwenk-Schiebe-Aussparung 36 eingreifender Schwenk-Schiebe-Vorsprung 38 vorgesehen. Der Schwenk-Schiebe-Vorsprung 38 ist in der Schwenk-Schiebe-Aussparung 36 in Richtung der Aussparungslängsachse A bewegbar derart aufgenommen, dass quer zur Aussparungslängsachse A im Wesentlichen kein Bewegungsspiel besteht und dass dieser in der Schwenk-Schiebe-Aussparung 36 verschwenkbar bzw. verdrehbar aufgenommen ist, wobei die Schwenk- bzw. Drehachse sich in der Zusatzgerät-Längsrichtung L erstreckt.

Die Schwenk-Schiebe-Aussparung 36 weist zwei in Richtung der Aussparungslängsachse A in Abstand zueinander positionierte Aussparungsendbereiche 40, 42 auf. Bei in der Aktivstellung positionierter Standbeineinheit 20 ist der Schwenk-Schiebe-Vorsprung 38 im Bereich des ersten Aussparungsendbereichs 40 angeordnet und stützt sich an diesem im Wesentlichen in der Höhenrichtung H ab. Dies bedeutet, dass über den Schwenk-Kopplungsträger 34 und die Abstützung des Schwenk-Schiebe-Vorsprungs 38 an diesem im ersten Aussparungsendbereich 40 eine das Gewicht des Gerätekörpers 20 übertragende Abstützfunktion erreicht wird.

In Richtung der Aussparungslängsachse A beidseits, also über bzw. unter der Schwenk-Schiebe-Aussparung 36, sind am Schwenk-Kopplungsträger 34 zwei Arretieraussparungen 44, 46 vorgesehen. An der Standbeineinheit 20 bzw. dem mit der Schwenk-Kopplungsanordnung 30 zusammenwirkenden Standbein 22 derselben ist ein Arretiervorsprung 48 vorgesehen, welcher, wie nachfolgend beschrieben, in jede der beiden Arretieraussparungen 44, 46 eingreifend positioniert werden kann.

Die beiden jeweils im Wesentlichen in einer Verlängerung der Aussparungslängsachse A liegenden Arretieraussparungen 44, 46 sind in Richtung von der Schwenk-Schiebe-Aussparung 36 weg und somit auch voneinander weg offen, so dass durch Bewegung im Wesentlichen in Richtung der Aussparungslängsachse A der Arretiervorsprung 48 in jede der beiden Arretieraussparungen 44, 46 eingreifend positioniert werden kann. Ist die Standbeineinheit 20 in der Aktivstellung, greift der Arretiervorsprung 48 in die unter der Schwenk-Schiebe-Aussparung 36 positionierte erste Arretieraussparung 44 ein. In diesem Zustand stützt sich die Standbeineinheit 20 über den Schwenk-Schiebe-Vorsprung 38 an dem von der ersten Arretieraussparung 44 entfernten Ende bzw. dem dort liegenden Aussparungsendbereich 40 der Schwenk-Schiebe-Aussparung 36 ab. Der Arretiervorsprung 48 ist in der ersten Schwenk-Schiebe-Aussparung 44 im Wesentlichen ohne seitliches Bewegungsspiel, also im Wesentlichen ohne Bewegungsspiel quer zur Aussparungslängsachse A, aufgenommen, ist vorzugsweise in Richtung der Aussparungslängsachse A jedoch nicht am Schwenk-Kopplungsträger 34 abgestützt, so dass eine Überbestimmung bei der Abstützung der Standbeineinheit 20 bezüglich des Schwenk-Kopplungsträgers 34 vermieden ist und diese im Wesentlichen nur vermittels der Schwenk-Schiebe-Vorsprungs 38 bezüglich des Schwenk-Kopplungsträgers 34 abgestützt ist. Grundsätzlich könnte auch oder alternativ die vertikale Abstützung im Bereich des Arretiervorsprungs 48 erfolgen.

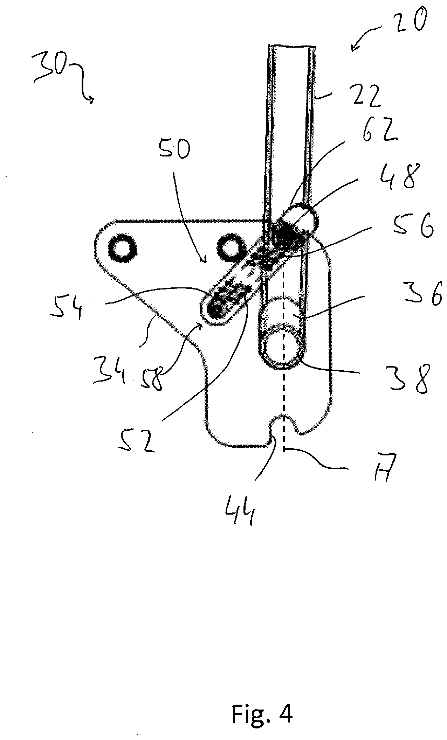

In dem in Fig. 4 dargestellten Inaktivzustand der Standbeineinheit 20, in welchem diese in der Höhenrichtung nach oben verschwenkt ist, ist der Schwenk-Schiebe-Vorsprung 38 am zweiten Aussparungsendbereich 42 der Schwenk-Schiebe-Aussparung 36 angeordnet bzw. in Richtung der Aussparungslängsachse A abgestützt. Durch diese Abstützung trägt der Schwenk-Kopplungsträger 34 in diesem Bereich das oder einen Teil des Gewichts der Standbeineinheit 20. Der Arretiervorsprung 48 greift in diesem Zustand in die über der Schwenk-Schiebe-Aussparung 36 positionierte zweite Arretieraussparung 46 ein und ist in dieser im Wesentlichen ohne Bewegungsspiel quer zur Aussparungslängsachse A aufgenommen. Auch hier kann die Anordnung derart sein, dass eine Abstützwirkung in Richtung der Aussparungslängsachse A im Bereich des Arretiervorsprungs 48 im Wesentlichen nicht erfolgt.

Um zu gewährleisten, dass die Standbeineinheit 20 zuverlässig in ihrer Aktivstellung oder in ihrer Inaktivstellung gehalten wird, ist dieser bzw. der Schwenk-Kopplungsanordnung 30 eine in dieser Ausgestaltung Vorspannmittel 50 bereitstellende Vorspannfeder 52 zugeordnet, welche als Schraubenzugfeder ausgebildet sein kann. In einem ersten Längsendbereich 54 ist die Vorspannfeder 52 bezüglich des Schwenk-Kopplungsträgers 34 abgestützt, beispielsweise indem sie in einem Abstützbereich 58 an einen am Schwenk-Kopplungsträger 34 vorgesehenen Zapfen 64 oder an einem anderen mit dem Gerätekörper 12 fest verbundenen und somit auch bezüglich des Schwenk-Kopplungsträgers 34 feststehenden Bauteil eingehängt ist. In dem zweiten Längsendbereich 56 ist die Vorspannfeder 52 bezüglich der Standbeineinheit 20 bzw. des Standbeins 22 derselben abgestützt, beispielsweise indem die Vorspannfeder 52 in diesem Bereich an einem am Standbein 22 vorgesehenen Zapfen 68 eingehängt ist. Die Abstützung der Vorspannfeder 52 bezüglich des Schwenk-Kopplungsträgers 34 erfolgt in dem Abstützbereich 58 in der Höhenrichtung zwischen den beiden Arretieraussparungen 44, 46, wobei der Abstützbereich 58 zur zweiten Arretieraussparung 46 einen geringeren Abstand aufweist, als zur zweiten Arretieraussparung 44. Dies bedeutet, dass bei in die erste Arretieraussparung 44 eingreifendem Arretiervorsprung 48 die Vorspannfeder 52 stärker gespannt ist, als bei in die zweie Arretieraussparung 46 eingreifendem Arretiervorsprung 48. Beispielsweise könnte vorgesehen sein, dass bei in die zweite Arretieraussparung 46 eingreifendem Arretiervorsprung 48 die Vorspannfeder 52 vollständig entspannt oder nahezu vollständig entspannt ist. Dadurch wird dem Umstand Rechnung getragen, dass bei in der Aktivstellung positionierter Standbeineinheit 20 die Vorspannmittel 50 zum Vorspannen der Standbeineinheit 20 in den in Fig. 3 dargestellten Zustand, in welchem der Arretiervorsprung 48 in die nach unten offene Arretieraussparung 44 eingreift und der Schwenk-Kopplungs-Vorsprung 38 an dem oben liegenden ersten Aussparungsendbereich 40 der Schwenk-Schiebe-Aussparung 36 abgestützt ist, diesen Zustand entgegen der Gewichtskraft der Standbeineinheit 20 beibehalten müssen. In dem in Fig. 4 dargestellten Inaktivzustand bewirkt die auf die Standbeineinheit 20 einwirkende Schwerkraft bereits, dass diese mit in die zweite Arretieraussparung 46 eingreifendem Arretiervorsprung 48 und am unteren, zweiten Aussparungsendbereich 42 sich abstützendem Schwenk-Schiebe-Vorsprung 38 gehalten wird. Den Vorspannmitteln 50 kommt in der Inaktivstellung somit im Wesentlichen die Funktion zu, dafür zu sorgen, dass Rüttelbewegungen oder Vibrationen nicht zu einem Anheben der Standbeineinheit 20 und dabei einem Herauslösen des Arretiervorsprungs 48 aus der zweiten Arretieraussparung 46 führen können.

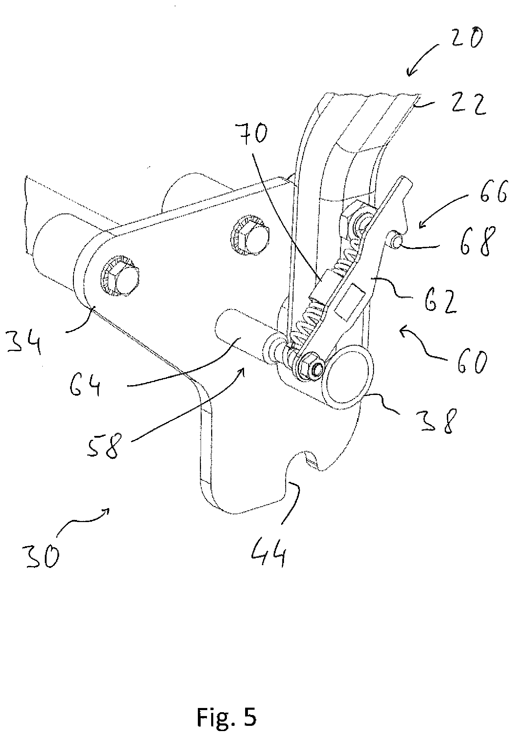

Um eine erhöhte Sicherheit gegen ein derartiges Herausbewegen der bzw. jeder Standbeineinheit 18, 20 aus der Inaktivstellung vorsehen zu können, sind in Zuordnung zur Schwenk-Kopplungsanordnung 30 Blockiermittel 60 vorgesehen. Diese umfassen im dargestellten Beispiel ein hebelartig ausgebildetes Blockierelement 62, das beispielsweise im Abstützbereich 58, also dort, wo die Vorspannfeder 52 an dem am Schwenk-Kopplungsträger 34 vorgesehenen Zapfen 64 eingehängt ist, schwenkbar getragen ist. Das Blockierelement 62 umfasst ferner einen hakenartig oder als Öffnung ausgebildeten Blockierabschnitt 66, mit welchem dieses beispielsweise den Zapfen 68 hintergreifend positioniert werden kann, an welchem die Vorspannfeder 52 in ihrem zweiten Längsendbereich 56 eingehängt ist. In dem in Fig. 5 dargestellten Blockierzustand blockiert das Blockierelement 62 die Vorspannfeder 52 gegen eine Änderung des Vorspannzustands derselben, da grundsätzlich die Standbeineinheit 20 gegen eine Bewegung in Richtung der Aussparungslängsachse A blockiert ist.

Um diesen Blockierzustand des Blockierelements 62 zuverlässig beibehalten zu können, kann an diesem ein die Vorspannfeder 52 zwischen ihren Längsendbereichen 54, 56 umgreifendes Sicherungselement 70, beispielsweise in Form einer Sicherungshülse, vorgesehen sein. Das Sicherungselement 70 behindert eine Ausdehnung bzw. ein Zusammenziehen der Vorspannfeder 52 in Längsrichtung nicht, hält jedoch das Blockierelement 62 in einer Positionierung, in welcher dieser sich im Wesentlichen entlang der Vorspannfeder 52 erstreckt und somit mit seinem Blockierabschnitt 66 den Zapfen 68 übergreift. Soll das Blockierelement 62 in eine den Zapfen 66 und damit die Standbeineinheit 20 freigebende Positionierung gebracht werden, kann das Blockierelement 62 um die durch den Zapfen 64 definierte Schwenkachse verschwenkt werden, was zu einer seitlichen Ausbauchung der Vorspannfeder 52 führt. Die Vorspannfeder 52 hält somit nicht nur die Standbeineinheit 20 in der Inaktivstellung, sondern hält auch das Blockierelement 62 in seiner Blockierstellung. Durch Verformen der Vorspannfeder 52 kann das Blockierelement aus seiner Blockierstellung herausbewegt werden und kann dann die Standbeineinheit 20 angehoben werden, um den Arretiervorsprung 48 aus der zweiten Arretieraussparung 46 nach oben herauszubewegen.

Zum Übergang zwischen der in Fig. 3 dargestellten Aktivstellung und der in Fig. 4 dargestellten Inaktivstellung wird bei angehobenem, beispielsweise an eine Bodenbearbeitungsmaschine angekoppeltem Gerätekörper 12 und somit nicht belasteter Standbeinbaugruppe 16 eine jeweilige Standbeineinheit 18 bzw. 20 entgegen der Vorspannwirkung der diesen jeweils im Zusammenhang mit den Standbeinen 22, 24 zugeordneten Vorspannfedern 52 nach unten verschoben, so dass die in Zuordnung zu den Standbeinen 20, 24 vorgesehenen Schwenk-Schiebe-Vorsprünge 38 in den diese aufnehmenden Schwenk-Schiebe-Aussparungen 36 nach unten verschoben werden. Dabei kommen die Arretiervorsprünge 48 außer Eingriff mit den diese zuvor noch aufnehmenden ersten Arretieraussparungen 44, so dass nach Lösen dieses Eingriffs die Standbeineinheit 18 bzw. 20 nach oben verschwenkt werden kann, bis die Arretiervorsprünge 48 über den nach oben offenen zweiten Arretieraussparungen 46 der jeweiligen Schwenk-Kopplungsanordnungen 30, 32 positioniert sind. Die Standbeineinheiten 18, 20 können bei Erreichen dieses Zustands abgesenkt werden, so dass die Arretiervorsprünge 48 in die zugeordneten zweiten Arretieraussparungen 46 eintauchen, bis die an den beiden axialen Enden der Verbindungsstreben 26 vorgesehenen bzw. durch diese bereitgestellten Schwenk-Schiebe-Vorsprünge 38 am jeweiligen Schwenk-Kopplungsträger 34 sich im Bereich der zweiten Aussparungsendbereiche 42 abstützen. Bei Erreichen dieses Zustands kann dann das Blockierelement 62 in den in Fig. 5 dargestellten Blockierzustand gebracht werden bzw. kommt im Verlaufe der Absenkung der jeweiligen Standbeineinheit 18 bzw. 20 von selbst in diesen Blockierzustand.

Zum Bewegen der Standbeineinheiten 18, 20 in die Aktivstellung wird der vorangehend beschriebene Vorgang in umgekehrter Reihenfolge durchgeführt, wobei zunächst die durch die Blockiermittel 60 bereitgestellte Blockierfunktion aufgehoben wird und nachfolgend die Standbeineinheiten 18, 20 angehoben und nach unten in Richtung zur jeweiligen Aktivstellung verschwenkt werden können. Wird dabei ein Zustand erreicht, in welchem die Arretiervorsprünge 48 im Bereich der bzw. unter den jeweiligen ersten Arretieraussparungen 44 positioniert sind, bewirkt die durch die Vorspannmittel 50 generierte Vorspannkraft, dass die jeweiligen Standbeineinheiten 18, 20 angehoben werden und in die in Fig. 1 bzw. in Fig. 3 dargestellte Aktivstellung kommen.

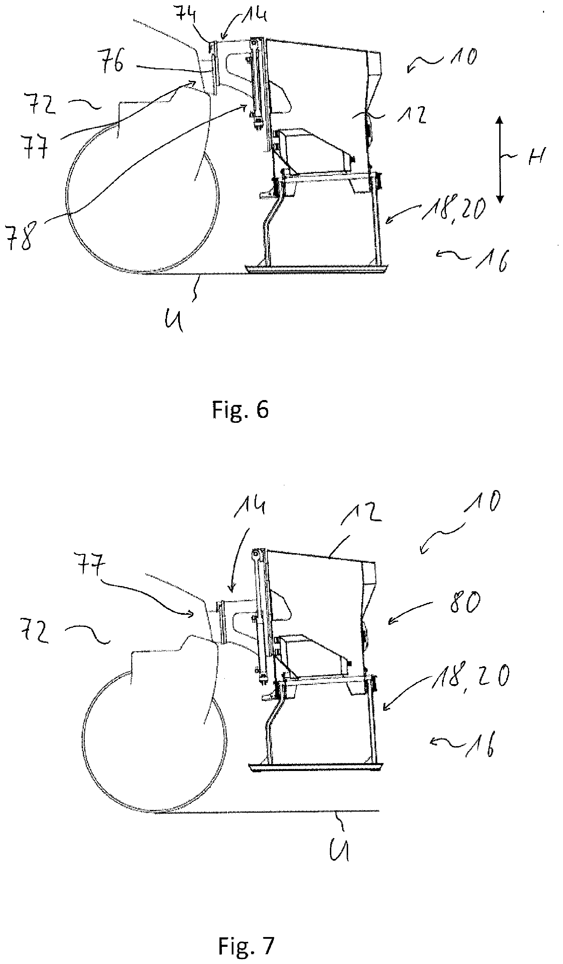

Die Fig. 6 und 7 zeigen das vorangehend beschriebene Zusatzgerät 10 mit in der Aktivstellung positionierten Standbeineinheiten 18, 20. In dem in Fig. 6 dargestellten Zustand steht das Zusatzgerät 10 vermittels der Standbeinbaugruppe 16 auf einem Untergrund U auf und ist noch nicht mit einer Bodenbearbeitungsmaschine 72, beispielsweise einem Bodenverdichter, gekoppelt. Die am Gerätekörper 12 vorgesehene Kopplungseinheit 14 ist in Höhenrichtung H nach oben verschoben und liegt mit daran vorgesehenen Kopplungshaken 74 somit über einer an der Bodenbearbeitungsmaschine 72 vorgesehenen, im Wesentlichen eine Gegen-Kopplungseinheit 77 bereitstellenden Gegen-Kopplungsplatte 76.

Durch eine Aktuatoranordnung 78, welche beispielsweise eine oder mehrere Kolben/Zylinder-Baugruppen umfassen kann, kann die Kopplungseinheit 14 bezüglich des Gerätekörpers 12 im Wesentlichen in der Höhenrichtung H nach unten verschoben werden, so dass die Kopplungshaken 74 den oberen Randbereich der Gegen-Kopplungsplatte 76 übergreifen und sich somit an der Gegen-Kopplungsplatte 76 einhängen. Eine stabile Positionierung kann dabei allein durch die Gewichtskraft des Zusatzgeräts 12 gewährleistet werden. Zusätzlich kann ein Formschluss, beispielsweise durch Verschraubung oder sonstige Formschlussmittel hergestellt werden.

Im Zuge der Absenkbewegung der Kopplungseinheit 74 bezüglich des Gerätekörpers 12 wird das Zusatzgerät 10 bzw. dessen Gerätekörper 12 mit der daran vorgesehenen Standbeinbaugruppe 16 angehoben, so dass die Standbeineinheiten 18, 20 sich vom Untergrund U entfernen. In diesem Zustand können dann die beiden Standbeineinheiten 18, 20 und der vorangehen beschriebenen Art und Weise in ihre Inaktivstellung nach oben verschwenkt werden.

Es ist darauf hinzuweisen, dass das Zusatzgerät 10 in verschiedensten Konstruktionsdetails von der vorangehend beschriebenen und in den Figuren dargestellten Ausgestaltung abweichen kann. So können beispielsweise die Standbeine 22, 24 der Standbeineinheiten 18, 20 verschieden geformt sein, um auch in Anpassung an die Bodenbearbeitungsmaschine 72 ein Stören mit anderen Systembereichen zu vermeiden. Beispielsweise könnten auch die im Kopplungszustand von der Bodenbearbeitungsmaschine 72 entfernt positionierten Standbeine 24 geschwungen ausgebildet sein, um zu gewährleisten, dass eine an der von der Bodenbearbeitungsmaschine 72 entfernten Seite des Zusatzgeräts 10 positionierte Lichtanlage 80 auch in seitlicher Richtung nicht von diesen Standbeinen 24 überdeckt wird. Auch können selbstverständlich eine oder beide Standbeineinheiten 18, 20 mehr als zwei Standbeine aufweisen, wobei beispielsweise dann nur in Zuordnung zu den beiden in der Zusatzgerät-Längsrichtung L am weitesten entfernt voneinander liegenden Standbeinen eine jeweilige Schwenk-Kopplungsanordnung mit dem vorangehend beschriebenen Aufbau vorgesehen sein kann. Alternativ könnten eine oder beide Standbeineinheiten 18, 20 nur ein einziges Standbein aufweisen, welches beispielsweise in Richtung der Schwenkachse der jeweiligen Standbeineinheit 18, 20 mittig an die Verbindungsstrebe 26 bzw. die Aufstandstrebe 28 angebunden sein kann.

Ferner ist darauf hinzuweisen, dass nicht notwendigerweise in Zuordnung zu jeder Schwenk-Kopplungsanordnung 30, 32 Blockiermittel 60 vorgesehen sein müssen. Die Blockierfunktion kann auch dadurch bereitgestellt werden, dass bei jeder der beiden Standbeineinheiten 18, 20 nur in Zuordnung zu einer einzigen Schwenk-Kopplungsanordnung 30, 32 derartige Blockiermittel 60 vorhanden sind.

Bei der vorangehend beschriebenen und in den Figuren dargestellten Ausgestaltung eines Zusatzgeräts 10 liegt zwischen der Aktivstellung und der Inaktivstellung der Standbeineinheiten 18, 20 ein Schwenkwinkel von etwa 180°. Abhängig von der Ausgestaltung des Gerätekörpers 12 können zwischen diesen beiden Stellungen auch andere Schwenkwinkel liegen. Dies kann dadurch realisiert werden, dass die beiden Arretieraussparungen 46, 48 bezüglich der Schwenk-Schiebe-Aussparung 36 so positioniert sind, dass die beiden Arretieraussparungen 46, 48 und die Schwenk-Schiebe-Aussparung 36 nicht auf einer Linie, beispielsweise der Aussparungslängsachse A, liegen.

Bei einer weiteren Abwandlung könnten die in Zuordnung zu den Standbeineinheiten 18, 20 vorgesehenen Schwenk-Kopplungsanordnungen 30 hinsichtlich der Zuordnung der verschiedenen Baugruppen derselben zum Gerätekörper 12 einerseits und der jeweiligen Standbeineinheit 18, 20 andererseits bezüglich der vorangehend beschriebenen und in den Figuren dargestellten Anordnung vertauscht sein. So könnten die Schwenk-Schiebe-Aussparung 36 und die Arretieraussparungen 44, 46, beispielsweise vorgesehen in einem dem Schwenk-Kopplungsträger 34 entsprechenden Bauteil, an einer jeweiligen Standbeineinheit 18, 20 vorgesehen sein, während der Schwenk-Schiebe-Vorsprung 38 und der Arretiervorsprung 48 bezüglich des Gerätekörpers 12 feststehend vorgesehen sein können.

## Patentansprüche

1. Zusatzgerät, insbesondere Splittstreuer, zur lösbaren Anbringung an einer Bodenbearbeitungsmaschine, insbesondere Bodenverdichter, umfassend:
- einen Gerätekörper (12),
- eine Kopplungseinheit (14) zur Kopplung mit einer Gegen-Kopplungseinheit (77) an einer Bodenbearbeitungsmaschine (72),
- eine Standbeinbaugruppe (16) mit wenigstens einer am Gerätekörper (12) zwischen einer Aktivstellung und einer Inaktivstellung verschwenkbaren Standbeineinheit (18, 20) mit wenigstens einem Standbein (22, 24), wobei in der Aktivstellung die wenigstens eine Standbeineinheit (18, 20) zum Bereitstellen einer Standbeinfunktion in einer Höhenrichtung (H) nach unten verschwenkt ist und in der Inaktivstellung die wenigstens eine Standbeineinheit (18, 20) in der Höhenrichtung (H) nach oben verschwenkt ist,
- in Zuordnung zu jeder Standbeineinheit (18, 20), wenigstens eine Schwenk-Kopplungsanordnung (30, 32) zur schwenkbaren Kopplung der Standbeineinheit (18, 20) mit dem Gerätekörper (12),
**dadurch gekennzeichnet,**
**dass** wenigstens eine Schwenk-Kopplungsanordnung (30, 32) umfasst:
- eine Schwenk-Schiebe-Aussparung (36) und wenigstens zwei Arretieraussparungen (44, 46) an einem bezüglich einer Baugruppe von Gerätekörper (12) und Standbeineinheit (18, 20) feststehenden Schwenk-Kopplungsträger (34), wobei jede Arretieraussparung (44, 46) in Richtung von der Schwenk-Schiebe-Aussparung (36) weg offen ist,
- einen in der Schwenk-Schiebe-Aussparung (36) verschwenkbar und verschiebbar aufgenommen Schwenk-Schiebe-Vorsprung (38) an der anderen Baugruppe von Gerätekörper (12) und Standbeineinheit (18, 20),
- einen Arretiervorsprung (48) an der anderen Baugruppe von Gerätekörper (12) und Standbeineinheit (18, 20), wobei durch Verschwenken und Verschieben des Schwenk-Schiebe-Vorsprungs (38) in der Schwenk-Schiebe-Aussparung (36) der Arretiervorsprung (48) wahlweise in einer ersten der Arretieraussparungen (44, 46) oder einer zweiten der Arretieraussparungen (44, 46) positionierbar ist,
**dass** die Schwenk-Schiebe-Aussparung (36) in Richtung einer Aussparungslängsachse (A) langgestreckt ist und in Richtung der Aussparungslängsachse (A) mit Abstand zueinander angeordnete Aussparungsendbereiche (40, 42) aufweist, wobei bei in die erste Arretieraussparung (44) eingreifendem Arretiervorsprung (48) der Schwenk-Schiebe-Vorsprung (38) im Bereich eines ersten der Aussparungsendbereiche (40, 42) positioniert ist und bei in die zweite Arretieraussparung (46) eingreifendem Arretiervorsprung (48) der Schwenk-Schiebe-Vorsprung (48) im Bereich eines zweiten der Aussparungsendbereiche (40, 42) positioniert ist,
**dass** der erste Aussparungsendbereich (40) an einem von der ersten Arretieraussparung (44) entfernten Ende der Schwenk-Schiebe-Aussparung (36) vorgesehen ist und der zweite Aussparungsendbereich (42) an einem von der zweite Arretieraussparung (46) entfernten Ende der Schwenk-Schiebe-Aussparung (36) vorgesehen ist, und
**dass** die erste Arretieraussparung (44) und die zweite Arretieraussparung (46) im Wesentlichen in Richtung der Aussparungslängsachse (A) der Schwenk-Schiebe-Aussparung (36) die Schwenk-Schiebe-Aussparung (36) zwischen sich aufnehmend beidseits der Schwenk-Schiebe-Aussparung (36) angeordnet sind und im Wesentlichen in Richtung der Aussparungslängsachse (A) voneinander weg offen sind.

2. Zusatzgerät nach Anspruch 1,
**dadurch gekennzeichnet,**
**dass** die Standbeinbaugruppe (16) zwei in einer Zusatzgerät-Querrichtung (Q) in Abstand zueinander angeordnete Standbeineinheiten (18, 20) umfasst, oder/und
**dass** jede Standbeineinheit (18, 20) um eine im Wesentlichen in einer Zusatzgerät-Längsrichtung (L) sich erstreckende Schwenkachse zwischen der Aktivstellung und der Inaktivstellung schwenkbar ist.

3. Zusatzgerät nach einem der vorangehenden Ansprüche,
**dadurch gekennzeichnet, dass** wenigstens eine, vorzugsweise jede Standbeineinheit (18, 20) wenigstens zwei im Wesentlichen in einer Zusatzgerät-Längsrichtung (L) in Abstand zueinander angeordnete Standbeine (22, 24) umfasst.

4. Zusatzgerät nach Anspruch 3,
**dadurch gekennzeichnet, dass** bei wenigstens einer, vorzugsweise jeder Standbeineinheit (18, 20) in Zuordnung zu jedem Standbein (22, 24) eine Schwenk-Kopplungsanordnung (30, 32) vorgesehen ist.

5. Zusatzgerät nach einem der vorangehenden Ansprüche
**dadurch gekennzeichnet, dass** jede Schwenk-Kopplungsanordnung (30, 32) umfasst:
- eine Schwenk-Schiebe-Aussparung (36) und wenigstens zwei Arretieraussparungen (44, 46) an einem bezüglich einer Baugruppe von Gerätekörper (12) und Standbeineinheit (18, 20), vorzugsweise bezüglich des Gerätekörpers (12), feststehenden Schwenk-Kopplungsträger (34), wobei jede Arretieraussparung (44, 46) vorzugsweise in Richtung von der Schwenk-Schiebe-Aussparung (36) weg offen ist,
- einen in der Schwenk-Schiebe-Aussparung (36) verschwenkbar und verschiebbar aufgenommen Schwenk-Schiebe-Vorsprung (38) an der anderen Baugruppe von Gerätekörper (12) und Standbeineinheit (18, 20), vorzugsweise an der Standbeineinheit (18, 20),
- einen Arretiervorsprung (48) an der anderen Baugruppe von Gerätekörper (12) und Standbeineinheit (18, 20), vorzugsweise an der Standbeineinheit (18, 20), wobei durch Verschwenken und Verschieben des Schwenk-Schiebe-Vorsprungs (38) in der Schwenk-Schiebe-Aussparung (36) der Arretiervorsprung (48) wahlweise in einer ersten der Arretieraussparungen (44, 46) oder einer zweiten der Arretieraussparungen (44, 46) positionierbar ist.

6. Zusatzgerät nach einem der vorangehenden Ansprüche,
**dadurch gekennzeichnet, dass** der Schwenk-Kopplungsträger (34) bezüglich des Gerätekörpers (12) feststeht, und dass der Schwenk-Schiebe-Vorsprung (38) und der Arretiervorsprung (48) an der Standbeineinheit (18, 20) vorgesehen sind.

7. Zusatzgerät nach einem der vorangehenden Ansprüche,
**dadurch gekennzeichnet, dass** bei in die erste Arretieraussparung (44) eingreifendem Arretiervorsprung (48) der Schwenk-Schiebe-Vorsprung (38) im Bereich eines ersten der Aussparungsendbereiche (40, 42) abgestützt ist und bei in die zweite Arretieraussparung (46) eingreifendem Arretiervorsprung (48) der Schwenk-Schiebe-Vorsprung (48) im Bereich eines zweiten der Aussparungsendbereiche (40, 42) abgestützt ist.

8. Zusatzgerät nach einem der vorangehenden Ansprüche,
**dadurch gekennzeichnet, dass**
die Aussparungslängsachse (A) der Schwenk-Schiebe-Aussparung (36) sich im Wesentlichen in der Höhenrichtung (H) erstreckt.

9. Zusatzgerät nach einem der vorangehenden Ansprüche
**dadurch gekennzeichnet, dass** Vorspannmittel (50) vorgesehen sind zum Vorspannen der Standbeineinheit (18, 20) derart, dass bei in jede der Arretieraussparungen (44, 46) eingreifendem Arretiervorsprung (48) der Arretiervorsprung (48) in Richtung Eingriff in die jeweilige Arretieraussparung (44, 46) vorgespannt ist.

10. Zusatzgerät nach Anspruch 9,
**dadurch gekennzeichnet, dass** die Vorspannmittel (50) wenigstens eine Vorspannfeder (52) umfassen, wobei die wenigstens eine Vorspannfeder (52) bezüglich des Schwenk-Kopplungsträgers (34) einerseits und der Standbeineinheit (18, 20) andererseits abgestützt ist.

11. Zusatzgerät nach Anspruch 9 oder 10,
**dadurch gekennzeichnet, dass** bei in die erste Arretieraussparung (44) eingreifendem Arretiervorsprung (48) die Vorspannmittel (50) eine größere Vorspannkraft erzeugen, als bei in die zweite Arretieraussparung (46) eingreifendem Arretiervorsprung (48).

12. Zusatzgerät nach Anspruch 10 und Anspruch 11,
**dadurch gekennzeichnet, dass** die wenigstens eine Vorspannfeder (52) bezüglich des Schwenk-Kopplungsträgers (34) in einem Abstützbereich (58) zwischen der ersten Arretieraussparung (44) und der zweiten Arretieraussparung (46) abgestützt ist, und dass ein Abstand des Abstützbereichs (58) zu der ersten Arretieraussparung (44) größer ist, als ein Abstand des Abstützbereichs (58) zu der zweiten Arretieraussparung (46).

13. Zusatzgerät nach einem der vorangehenden Ansprüche
**dadurch gekennzeichnet, dass** Blockiermittel (60) vorgesehen sind zum Blockieren der Standbeineinheit (18, 20) gegen Bewegung bezüglich des Schwenk-Kopplungsträgers (34) wenigstens bei in eine der Arretieraussparungen (44, 46) eingreifendem Arretiervorsprung (48), vorzugsweise wobei die Blockiermittel (60) ein die Vorspannmittel (50) gegen Veränderung des Vorspannzustandes blockierendes Blockierelement (62) umfassen oder/und wobei die Blockiermittel (60) durch die Vorspannmittel (50) in einen Blockierzustand vorgespannt sind.

14. Zusatzgerät nach einem der vorangehenden Ansprüche
**dadurch gekennzeichnet, dass** bei in die erste Arretieraussparung (44) eingreifendem Arretiervorsprung (48) die Standbeineinheit (18, 20) in der Aktivstellung ist und bei in die zweite Arretieraussparung (46) eingreifendem Arretiervorsprung (48) die Standbeineinheit (18, 20) in der Inaktivstellung ist.

15. Zusatzgerät nach einem der vorangehenden Ansprüche,
**dadurch gekennzeichnet, dass** die Kopplungseinheit (14) an dem Gerätekörper (12) im Wesentlichen in der Höhenrichtung (H) verstellbar vorgesehen ist.

## Claims

1. An attachment, in particular a grit spreader, intended to be removably mounted on a soil processing machine, in particular a soil compactor, comprising:
- an appliance body (12),
- a coupling unit (14) for coupling with a counter-coupling unit (77) on a soil processing machine (72),
- a support leg assembly (16) with at least one support leg unit (18, 20) pivotable on the appliance body (12) between an active position and an inactive position, with at least one support leg (22, 24), wherein, in the active position, the at least one support leg unit (18, 20) is pivoted downwards in a height direction (H) to provide a support leg function and, in the inactive position, the at least one support leg unit (18, 20) is pivoted upwards in the height direction (H),
- in association with each support leg unit (18, 20), at least one pivoting-coupling arrangement (30, 32) for pivotable coupling of the support leg unit (18, 20) to the appliance body (12),
**characterized in that**
at least one pivoting-coupling arrangement (30, 32) comprises:
- a pivoting-sliding recess (36) and at least two locking recesses (44, 46) on a pivoting-coupling support (34) fixed relative to one assembly of the appliance body (12) and the support leg unit (18, 20), wherein each locking recess (44, 46) is open in the opposite direction to the pivoting-sliding recess (36),
- a pivoting-sliding projection (38) pivotally and slidably received in the pivoting-sliding recess (36) on the other assembly of the appliance body (12) and the support leg unit (18, 20),
- a locking projection (48) on the other assembly of the appliance body (12) and the leg unit (18, 20), wherein the locking projection (48) is positionable optionally in a first one of the locking recesses (44, 46) or in a second one of the locking recesses (44, 46) by pivoting and sliding the pivoting-sliding projection (38) in the pivoting-sliding recess (36),
**in that** the pivoting-sliding recess (36) is elongate in the direction of a recess longitudinal axis (A) and has recess end regions (40, 42) arranged at a distance from one another in the direction of the recess longitudinal axis (A), wherein when the locking projection (48) engages in the first locking recess (44, 42) the pivoting-sliding projection (38) is positioned in the region of a first one of the recess end regions (40, 42) and, when the locking projection (48) engages in the second locking recess (46), the pivotable-sliding projection (48) is positioned in the region of a second of the recess end regions (40, 42),
**in that** the first recess end region (40) is provided at an end of the pivoting-sliding recess (36) remote from the first locking recess (44) and the second recess end region (42) is provided at an end of the pivoting-sliding recess (36) remote from the second locking recess (46), and
**in that** the first locking recess (44) and the second locking recess (46) are arranged essentially in the direction of the recess longitudinal axis (A) of the pivoting-sliding recess (36), receiving the pivoting-sliding recess (36) between them, on either side of the pivoting-sliding recess (36) and are open essentially away from one another in the direction of the recess longitudinal axis (A).

2. The attachment according to claim 1,
**characterized in that**
the support leg assembly (16) comprises two support leg units (18, 20) arranged at a distance from one another in a transverse direction (Q) of the attachment, and/or
**in that** each support leg unit (18, 20) is pivotable between the active position and the inactive position about a pivot axis extending essentially in a longitudinal direction (L) of the attachment.

3. The attachment according to one of the preceding claims,
**characterized in that** at least one, preferably each, support leg unit (18, 20) comprises at least two support legs (22, 24) arranged at a distance from one another essentially in a longitudinal direction (L) of the attachment.

4. The attachment according to claim 3,
**characterized in that** a pivoting-coupling arrangement (30, 32) is provided for at least one, preferably each, support leg unit (18, 20) in association with each support leg (22, 24).

5. The attachment according to one of the preceding claims,
**characterized in that** each pivoting-coupling arrangement (30, 32) comprises:
- a pivoting-sliding recess (36) and at least two locking recesses (44, 46) on a pivoting-coupling support (34) fixed relative to one assembly of the appliance body (12) and the support leg unit (18, 20), preferably relative to the appliance body (12), wherein each locking recess (44, 46) is preferably open in the opposite direction to the pivoting-sliding recess (36),
- a pivoting-sliding projection (38) pivotably and slidably received in the pivoting-sliding recess (36) on the other assembly of the appliance body (12) and the support leg unit (18, 20), preferably on the support leg unit (18, 20),
- a locking projection (48) on the other assembly of the appliance body (12) and the support leg unit (18, 20), preferably on the support leg unit (18, 20), wherein the locking projection (48) can be selectively positioned in a first of the locking recesses (44, 46) or in a second of the locking recesses (44, 46) by pivoting and sliding the pivoting-sliding projection (38) in the pivoting-sliding recess (36).

6. The attachment according to one of the preceding claims,
**characterized in that** the pivoting-coupling support (34) is fixed relative to the appliance body (12), and **in that** the pivoting-sliding projection (38) and the locking projection (48) are provided on the support leg unit (18, 20).

7. The attachment according to one of the preceding claims,
**characterized in that,** when the locking projection (48) engages in the first locking recess (44), the pivoting-sliding projection (38) is supported in the region of a first of the recess end regions (40, 42) and, when the locking projection (48) engages in the second locking recess (46), the pivoting-sliding projection (48) is supported in the region of a second of the recess end regions (40, 42).

8. The attachment according to one of the preceding claims,
**characterized in that** the longitudinal axis (A) of the pivoting-sliding recess (36) extends essentially in the height direction (H).

9. The attachment according to one of the preceding claims,
**characterized in that** biasing means (50) are provided for biasing the support leg unit (18, 20) such that, when the locking projection (48) engages in each of the locking recesses (44, 46), the locking projection (48) is biased towards engagement in the corresponding locking recess (44, 46).

10. The attachment according to claim 9,
**characterized in that** the biasing means (50) comprise at least one biasing spring (52), wherein said at least one biasing spring (52) is supported relative to the pivoting-coupling support (34) on the one hand and the support leg unit (18, 20) on the other hand,

11. The attachment according to claim 9 or 10,
**characterized in that,** when the locking projection (48) engages in the first locking recess (44), the biasing means (50) generate a greater biasing force than when the locking projection (48) engages in the second locking recess (46).

12. The attachment according to claim 10 and claim 11,
**characterized in that** the at least one biasing spring (52) is supported relative to the pivoting-coupling support (34) in a support region (58) between the first locking recess (44) and the second locking recess (46), and **in that** a distance of the support region (58) from the first locking recess (44) is greater than a distance of the support region (58) from the second locking recess (46).

13. The attachment according to one of the preceding claims,
**characterized in that** blocking means (60) are provided for blocking the fixed support leg unit (18, 20) against movement relative to the pivoting-coupling support (34) at least when the locking projection (48) engages in one of the locking recesses (44, 46), preferably, wherein the blocking means (60) comprises a blocking element (62) blocking the biasing means (50) against any change in the biasing state and/or the blocking means (60) is biased into a blocking state by the biasing means (50).

14. The attachment according to one of the preceding claims,
**characterized in that** when the locking projection (48) engages in the first locking recess (44), the support leg unit (18, 20) is in an active position and when the locking projection (48) engages in the second locking recess (46), the support leg unit (18, 20) is in an inactive position.

15. The attachment according to one of the preceding claims,
**characterized in that** the coupling unit (14) is provided on the appliance body (12) so as to be adjustable essentially in the height direction (H).

## Revendications

1. Un accessoire, notamment épandeur de gravillons, destiné à être monté de manière amovible sur une machine de travail du sol, notamment un compacteur de sol, comprenant :
- un corps d'appareil (12),
- une unité d'accouplement (14) pour l'accouplement avec une unité de contre-accouplement (77) sur une machine de travail du sol (72),
- un module de pied de support (16) avec au moins une unité de pied de support (18, 20) pouvant pivoter sur le corps d'appareil (12) entre une position active et une position inactive, avec au moins un pied de support (22, 24), dans lequel, dans la position active, ladite au moins une unité de pied de support (18, 20) est pivotée vers le bas dans une direction de hauteur (H) pour fournir une fonction de pied de support et, dans la position inactive, ladite au moins une unité de pied de support (18, 20) est pivotée vers le haut dans la direction de hauteur (H),
- en association avec chaque unité de pied de support (18, 20), au moins un dispositif d'accouplement pivotant (30, 32) pour l'accouplement pivotant de l'unité de pied de support (18, 20) avec le corps d'appareil (12),
**caractérisé en ce que**
au moins un dispositif d'accouplement pivotant (30, 32) comprend :
- un évidement pivotant-coulissant (36) et au moins deux évidements d'arrêt (44, 46) sur un support d'accouplement pivotant (34) fixe par rapport à un ensemble du corps d'appareil (12) et de l'unité de pied de support (18, 20), dans lequel chaque évidement d'arrêt (44, 46) est ouvert dans la direction opposée à l'évidement pivotant-coulissant (36),
- une saillie pivotante-coulissante (38) reçue de manière pivotante et coulissante dans l'évidement pivotant-coulissant (36) sur l'autre ensemble du corps d'appareil (12) et de l'unité de pied de support (18, 20),
- une saillie d'arrêt (48) sur l'autre ensemble du corps d'appareil (12) et de l'unité de pied de support (18, 20), dans lequel la saillie d'arrêt (48) peut être positionnée sélectivement dans un premier des évidements d'arrêt (44, 46) ou dans un deuxième des évidements d'arrêt (44, 46) par pivotement et déplacement de la saillie pivotante-coulissante (38) dans l'évidement pivotant-coulissant (36),
**en ce que** l'évidement pivotant-coulissant (36) est allongé dans la direction d'un axe longitudinal d'évidement (A) et présente des zones d'extrémité d'évidement (40, 42) disposées à distance les unes des autres dans la direction de l'axe longitudinal d'évidement (A), dans lequel lorsque la saillie d'arrêt (48) s'engage dans le premier évidement d'arrêt (42, 44) la saillie pivotante-coulissante (38) est positionnée dans la région d'une première des zones d'extrémité d'évidement (40, 42) et, lorsque la saillie d'arrêt (48) s'engage dans le deuxième évidement d'arrêt (46), la saillie pivotante-coulissante (48) est positionnée dans la région d'une deuxième des zones d'extrémité d'évidement (40, 42),
**en ce que** la première zone d'extrémité d'évidement (40) est prévue à une extrémité de l'évidement pivotant-coulissant (36) éloignée du premier évidement d'arrêt (44) et la deuxième zone d'extrémité d'évidement (42) est prévue à une extrémité de l'évidement pivotant-coulissant (36) éloignée du deuxième évidement d'arrêt (46), et
**en ce que** le premier évidement d'arrêt (44) et le deuxième évidement d'arrêt (46) sont disposés essentiellement dans la direction de l'axe longitudinal d'évidement (A) de l'évidement pivotant-coulissant (36), en recevant entre eux l'évidement pivotant-coulissant (36), de part et d'autre de l'évidement pivotant-coulissant (36) et sont ouverts en s'écartant essentiellement l'un de l'autre dans la direction de l'axe longitudinal d'évidement (A).

2. L'accessoire selon la revendication 1,
**caractérisé en ce que**
le module de pied de support (16) comprend deux unités de pied de support (18, 20) disposées à distance l'une de l'autre dans une direction transversale (Q) de l'accessoire,
ou/et
**en ce que** chaque unité de pied de supports (18, 20) peut pivoter entre la position active et la position inactive autour d'un axe de pivotement qui s'étend essentiellement dans une direction longitudinale de'accessoire (L).

3. L'accessoire selon l'une des revendications précédentes,
**caractérisé en ce qu'**au moins une, de préférence chaque unité de pied de support (18, 20) comprend au moins deux pieds de support (22, 24) disposés à distance l'un de l'autre essentiellement dans une direction longitudinale (L) de l'accessoire.

4. L'accessoire selon la revendication 3,
**caractérisé en ce que** un dispositif d'accouplement pivotant (30, 32) est prévu pour au moins une, de préférence chaque unité de pied de support (18, 20), en association avec chaque pied de support (22, 24).

5. L'accessoire selon l'une des revendications précédentes,
**caractérisé en ce que** chaque dispositif d'accouplement pivotant (30, 32) comprend :
- un évidement pivotant-coulissant (36) et au moins deux évidements d'arrêt (44, 46) sur un support d'accouplement pivotant (34) fixe par rapport à un ensemble du corps d'appareil (12) et de l'unité de pied de support (18, 20), de préférence par rapport au corps d'appareil (12), dans lequel chaque évidement d'arrêt (44, 46) est de préférence ouvert en direction opposée à l'évidement pivotant-coulissant (36),
- une saillie pivotante-coulissante (38) reçue de manière pivotante et coulissante dans l'évidement pivotant-coulissant (36) sur l'autre ensemble du corps d'appareil (12) et de l'unité de pied de support (18, 20), de préférence sur l'unité de pied de support (18, 20),
- une saillie d'arrêt (48) sur l'autre ensemble du corps d'appareil (12) et de l'unité de pied de support (18, 20), de préférence sur l'unité de pied de support (18, 20), dans lequel la saillie d'arrêt (48) peut être positionnée sélectivement dans un premier des évidements d'arrêt (44, 46) ou dans un deuxième des évidements d'arrêt (44, 46) par pivotement et déplacement de la saillie pivotante-coulissante (38) dans l'évidement pivotant-coulissant (36).

6. L'accessoire selon l'une des revendications précédentes,
**caractérisé en ce que** le support d'accouplement pivotant (34) est fixe par rapport au corps d'appareil (12), et **en ce que** la saillie pivotante-coulissante (38) et la saillie d'arrêt (48) sont prévues sur l'unité de pied de support (18, 20).

7. L'accessoire selon l'une des revendications précédentes,
**caractérisé en ce que,** lorsque la saillie d'arrêt (48) s'engage dans le premier évidement d'arrêt (44), la saillie pivotante-coulissante (38) est supportée dans la région d'une première des zones d'extrémité d'évidement (40, 42) et, lorsque la saillie d'arrêt (48) s'engage dans le deuxième évidement d'arrêt (46), la saillie pivotante-coulissante (48) est supportée dans la région d'une deuxième des zones d'extrémité d'évidement (40, 42).

8. L'accessoire selon l'une des revendications précédentes,
**caractérisé en ce que** l'axe longitudinal (A) de l'évidement pivotant-coulissant (36) s'étend essentiellement dans la direction de hauteur (H).

9. L'accessoire selon l'une des revendications précédentes,
**caractérisé en ce que** des moyens de précontrainte (50) sont prévus pour précontraindre l'unité de pied de support (18, 20) de telle sorte que, lorsque la saillie d'arrêt (48) s'engage dans chacun des évidements d'arrêt (44, 46), la saillie d'arrêt (48) est précontrainte en direction de l'engagement dans l'évidement d'arrêt (44, 46) correspondant.

10. L'accessoire selon la revendication 9,
**caractérisé en ce que** les moyens de précontrainte (50) comprennent au moins un ressort de précontrainte (52), dans lequel ledit au moins un ressort de précontrainte (52) étant supporté par rapport au support d'accouplement pivotant (34) d'une part et à l'unité de pied de support (18, 20) d'autre part.

11. L'accessoire selon la revendication 9 ou 10,
**caractérisé en ce que,** lorsque la saillie d'arrêt (48) s'engage dans le premier évidement d'arrêt (44), les moyens de précontrainte (50) génèrent une force de précontrainte plus importante que lorsque la saillie d'arrêt (48) s'engage dans le deuxième évidement d'arrêt (46).

12. L'accessoire selon la revendication 10 et la revendication 11,
**caractérisé en ce que** ledit au moins un ressort de précontrainte (52) est supporté par rapport au support d'accouplement pivotant (34) dans une zone de support (58) entre le premier évidement d'arrêt (44) et le deuxième évidement d'arrêt (46), et **en ce qu'**une distance de la zone de support (58) par rapport au premier évidement d'arrêt (44) est supérieure à une distance de la zone de support (58) par rapport au deuxième évidement d'arrêt (46).

13. L'accessoire selon l'une des revendications précédentes,
**caractérisé en ce que** des moyens de blocage (60) sont prévus pour bloquer l'unité de pied de support (18, 20) contre tout mouvement par rapport au support d'accouplement pivotant (34) au moins lorsque la saillie d'arrêt (48) s'engage dans l'un des évidements d'arrêt (44, 46), de préférence, dans lequel les moyens de blocage (60) comprennent un élément de blocage (62) bloquant les moyens de précontrainte (50) contre toute modification de l'état de précontrainte ou/et les moyens de blocage (60) sont précontraints dans un état de blocage par les moyens de précontrainte (50).

14. L'accessoire selon l'une des revendications précédentes,
**caractérisé en ce que** lorsque la saillie d'arrêt (48) s'engage dans le premier évidement d'arrêt (44), l'unité de pied de support (18, 20) est en position active et lorsque la saillie d'arrêt (48) s'engage dans le deuxième évidement d'arrêt (46), l'unité de pied de support (18, 20) est en position inactive.

15. L'accessoire selon l'une des revendications précédentes,
**caractérisé en ce que** l'unité d'accouplement (14) est prévue sur le corps d'appareil (12) de manière à pouvoir être réglée essentiellement dans la direction de hauteur (H).
